# EUROPEAN PATENT APPLICATION

(11) **EP 0 545 067 A2**
(43) Date of publication of application: **09.06.1993**
(21) Application number: 92118355.4
(22) Date of filing: 08.11.1988
(51) Int. Cl.: G03G 15/00

(54) **Image-forming machine**

(30) Priority: 10.11.1987 JP 282201/87; 11.11.1987 JP 283078/87; 30.11.1987 JP 300074/87; 30.11.1987 JP 300079/87
(62) Divisional of application: 88118572.2
(71) Applicant: MITA INDUSTRIAL CO. LTD., Osaka 540 (JP)
(72) Inventor: Koyama, Shigeo, Ibaraki-shi, Osaka-fu (JP)
(74) Representative: Popp, Eugen, Dr.

(57) **Abstract**

An image-forming machine comprising a main body (301) for forming an image on the surface of a sheet material during conveyance through a conveying passage (69), a feed means (302) for feeding a sheet material to the conveying passage (69), and a sorter (304) having a plurality of bin trays for sorting sheet materials among the bin trays, said sheet materials being discharged from the conveying passage (69) and selectively introduced into the sorter (304), wherein the feed means (302) and the sorter (304) are mounted on a supporting unit (306) disposed on one side of the main body (301), and the supporting unit (306) is detachably mounted on the main body (301).

## Description

### Field of the Invention

This invention relates to an image-forming machine such as a laser beam printer.

### Description of the Prior Art

Image-forming machines such as a laser beam printer generally include an image-bearing means such as a rotating drum having a photosensitive material on its surface, an image-forming means for forming a toner image on the surface of the photo-sensitive material, a transfer means disposed in a transfer zone, a conveying passage for conveying a sheet material such as a recording sheet through the transfer zone, and a receiving section for receiving the sheet materials conveyed through the conveying passage in the stacked state.

The conventional image-forming machines, however, have not proved to be entirely satisfactory, and are still desired to be improved in various respects.

In the image-forming machine having the above-mentioned sorter, a feed means is disposed on one side of the main body, and a sorter means, on the other side of the main body. A sheet material fed from the feed means is adapted to be introduced into the sorter means through a conveying passage extending nearly linearly. Accordingly, a relatively large space is required to install the entire machine.

### Summary of the Invention

It is an object of this invention to provide an improved image-forming machine which can be installed entirely even in a relatively small space and can be easily built in a shell type.

Other objects of this invention along with its features will become apparent from the following description.

### Brief Description of the Drawings

Figure 1 is a simplified sectional view showing an embodiment of the laser beam printer as one example of the image-forming machine of the invention with an upper cover member at an open position and an auxiliary receiving member at a first position.

Figure 2 is a top plan view showing the laser beam printer of Figure 1 with its cover member omitted.

Figure 3 is a simplified sectional view showing the laser beam printer of Figure 1 with the upper cover member at a closed position and its auxiliary receiving member at a second position.

Figure 4 is a simplified sectional view showing a modified example of the laser beam printer of the embodiment as shown in Figs. 1 to 3.

### Detailed Description of Preferred Embodiments

The invention will be described below in detail with reference to the accompanying drawings.

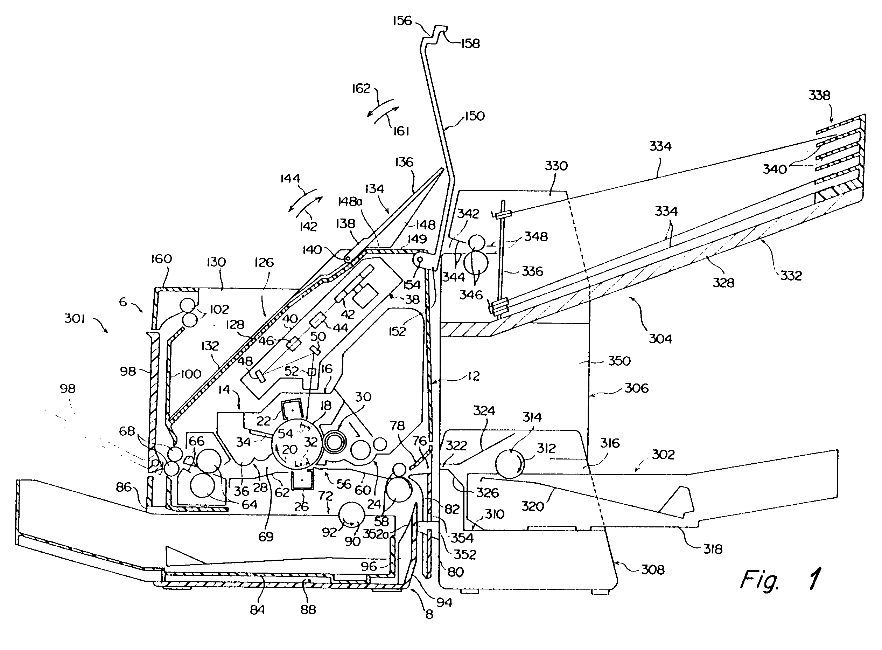

Figures 1 to 3 show an embodiment of the laser beam printer as one example of the image-forming machine of the invention.

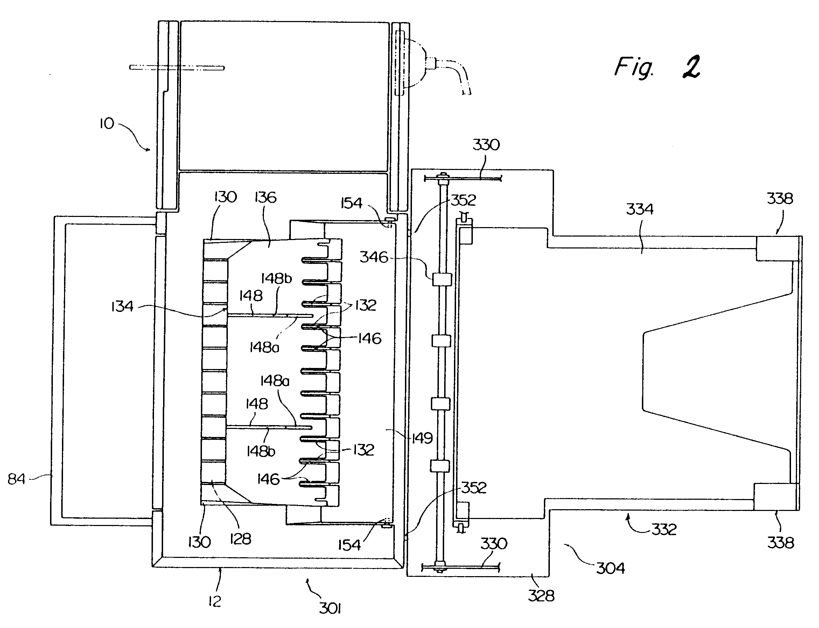

In Figures 1 and 2, the illustrated laser beam printer includes a main body shown generally at 301, a feed means shown at 302 and a sorter shown at 304. The feed means 302 and the sorter 304 are mounted on a supporting unit 306.

The main body 301 is provided with a rectangular parallel-pipedal housing 6 comprised of a lower housing 8, an upper housing 10 and an opening-closing housing 12. The opening-closing housing 12 is mounted on the upper housing 10 so as to be free to pivot between an open position (not shown) and a closed position (shown in Figures 1 to 3).

A process unit 14 is disposed nearly centrally in the housing 6. The illustrated process unit 14 is provided with a unit frame 16 to be detachably mounted on the housing 6, and a rotating drum 18 constituting an image-bearing means is rotatably mounted on the unit frame 16. An electrophotographic sensitive material is disposed on the peripheral surface of the rotating drum 18. Around the rotating drum 18 to he rotated in the direction shown by an arrow 20 are disposed a charging corona discharger 22, a developing device 24, a transfer corona discharger 26 constituting a transfer means and a cleaning device 28. The charging corona discharger 22, the developing device 24 and the cleaning device 28 are mounted on the unit frame 16. The charging corona discharger 22 charges the photosensitive material on the rotating drum 18 to a specific polarity. The developing device 24 is provided with a magnetic brush mechanism 30 and develops a latent electrostatic image formed as described below to a toner image. The transfer corona discharger 26 disposed in a transfer zone 32 applies a corona discharge to the back surface of a sheet material conveyed through a conveying passage as described below. The cleaning device 28 is provided with an elastic blade 34 acting on the surface of the photosensitive material and removes the toner remaining on the surface of the photosensitive material and recovers it in a toner recovery chamber 36.

An optical unit 38 is disposed above the process unit 14 within the housing 6. The optical unit 38 has a box-like unit housing 40, and within the housing 40 are disposed a laser beam source (not shown), a rotating polygon mirror 42 to be moved in a predetermined direction, a first image-forming lens 44, a second image-forming lens 46, a first reflecting mirror 48, a second reflecting mirror 50 and a cylindrical lens 52. The laser beam source (not shown) irradiates a laser beam based on the image information output, for example, from a computer toward the rotating polygon mirror 42. As shown by solid lines in Figure 1, the laser beam reflected from the polygon mirror 42 passes through the first image-forming lens 44 and the second image-forming lens 46 and reaches the first reflecting mirror 48. It is reflected by the first reflecting mirror 48 and the second reflecting mirror 50, passes through the cylindrical lens 12 and is projected onto the surface of the rotating drum 18. A conveying mechanism shown generally at 56 is provided below the process unit 14 within the housing 6. The conveying mechanism 56 is provided with a conveyor roller pair 58, a guide plate 60, a guide plate 62, a fixing roller 64, a guide claw 66 and a conveyor roller pair 68 which defines a main portion of a conveying passage 69 for conveying sheet materials such as recording paper. In the illustrated embodiment, the upstream end of the conveying passage 69 is bifurcated. One part extends to the right in a straight line. The other part is curved and extends downwardly, and an automatic feed means 72 is disposed at its upstream end (more specifically, below the conveying mechanism 56 and at the bottom part of the housing 6). When a sheet material is inserted through an opening 76 formed in the right wall surface of the housing 6, the sheet material is conducted to the conveying roller pair 58 past the space between the undersurface of a guide plate 78 and the upper end edge of a guide protrusion 82 provided on the inside surface of the wall 80 of the lower housing 8. The illustrated automatic feed means 72 is provided with a cassette 84 in which sheet materials are loaded in the stacked state. The cassette 84 is detachably loaded into a cassette receiving section 88 defined in the bottom part of the housing 6 through an opening 86 formed in the left wall surface of the lower housing 8. A feed roller 90 is disposed above the cassette receiving section 88. Accordingly, when the feed roller 90 is rotated in the direction shown by an arrow 92, the sheet materials are delivered one by one from the cassette 84. The delivered sheet material is guided by a guide protrusion 96 provided in an upstanding wall 94 in the lower housing 6 and the guide protrusion 82 provided in the wall 80, and conducted to the conveyor roller pair 58.

The downstream end portion of the conveying passage is bifurcated. In this regard, an opening-closing cover 98 constituting part of the opening-closing housing 12 is mounted so as to be free to pivot between a first position shown by a solid line in Figure 1 and a second position shown by a two-dot chain line in Figure 1. When the opening-closing cover 98 is at the first position, the sheet material fed by the conveyor roller pair 68 is further conveyed upwardly and conducted to a discharge roller pair 102 through the space between the opening-closing cover 98 and a wall 100 of the opening-closing housing 12, and is discharged out of the housing 6 by the action of the discharge roller pair 102. On the other hand, when the opening-closing cover 98 is at the second position, the sheet material fed by the conveyor roller pair 68 is directly discharged out of the housing 6 without being conveyed upwardly and received on the inside surface (the upper surface in the state shown by the two-dot chain line) of the cover 98.

With reference to Figure 1, the operation of the image-forming machine described above is briefly stated below.

While the rotating drum 18 is rotated in the direction of arrow 20, the charging corona discharger 22 charges the photosensitive material of the rotating drum 18, and then in the projecting zone 54, a laser beam having a certain piece of image information from the laser beam source (not shown) of the optical unit 38 is projected onto the photosensitive material to form a latent electrostatic image corresponding to the image information on the surface of the photosensitive material. Thereafter, the magnetic brush mechanism 30 of the developing device 24 applies a toner to the latent electrostatic image on the photosensitive material to develop it to a toner image. Thus, by the action of the image-forming machine comprised of the charging corona discharger 22, the optical unit 38 and the developing device 24, a toner image is formed on the rotating drum 18. Then, a sheet material fed from the feed means is brought into contact with the photosensitive material in the transfer zone 32 to transfer the toner image from the photosensitive material to the sheet material. The sheet material bearing the toner image is peeled from the rotating drum 18 and conveyed to the fixing roller pair 64. By the action of the fixing roller pair 64, the toner image is fixed to the surface of the sheet material. The sheet material bearing the fixed toner image is conveyed by the conveyor roller pair 68, and when the opening-closing cover 98 is at the second position, directly discharged onto the cover 98. As can be seen from Figure 1, the discharged sheet material has the image-bearing surface turned upwardly. In contrast, when the cover 98 is at the first position, the sheet material conveyed by the conveying roller pair 68 is further conveyed upwardly between the cover 98 and the wall 100, and by the action of the discharge roller pair 102, discharged toward the receiving section 126 provided in the opening-closing housing 12. In this case, the discharged sheet material has the image-bearing surface turned downwardly. The sheet material discharged from the discharge roller pair 102 is received by the receiving section 126 of the housing 12 or is introduced into the introduction passage through an introduction opening of the sorter. Meanwhile, the rotating drum 18 continues to rotate, and by the action of the cleaning device 28, the toner remaining on the photosensitive material is removed.

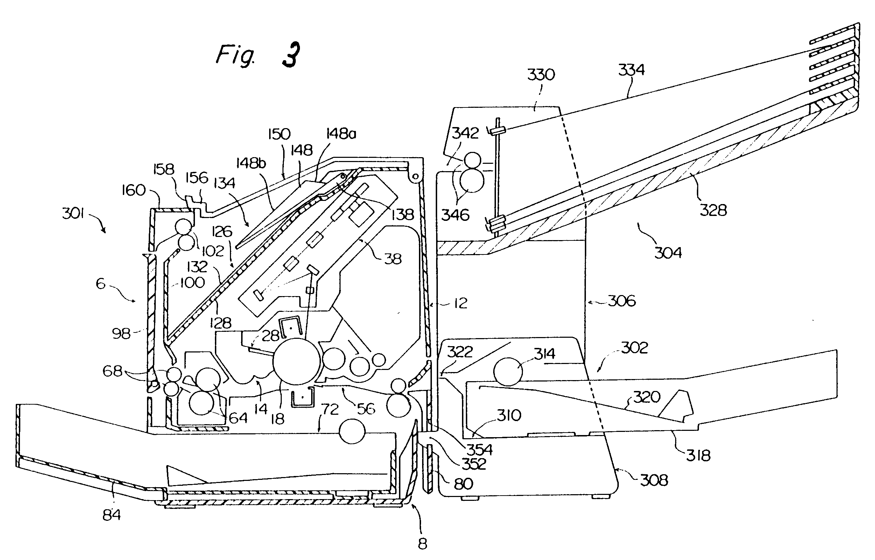

With reference to Figure 3 as well as Figures 1 and 2, the receiving section 126 provided in the opening-closing housing 12 and elements relating to it will be described.

In the illustrated embodiment, the receiving section 126 is defined by the upwardly extending wall 100, an inclined upper wall 128 extending upwardly inclinedly to the right in Figures 1 to 3 and nearly triangular walls 130 on both sides of the inclined upper wall 128. The receiving surface defined by the upper surface of the inclined upper wall 128 extends in a straight line upwardly inclinedly at an angle of about 45 degrees from one end portion (the left end portion in Figures 1 to 3) of the main body to its other end portion (the right end portion in Figures 1 to 3). A plurality of vertically spaced protrusions 132 extending in the direction perpendicular to the sheet surface in Figures 1 to 3 are provided integrally on the upper surface of the inclined upper wall 128.

An auxiliary receiving member 134 is disposed on the upper end portion of the receiving section 126, namely on the upper end portion of the inclined upper wall 128. The illustrated auxiliary receiving member 134 is constructed of a plate-like member 136, and supporting projections 138 (only one of which is shown in Figures 1 and 3) provided in both ends of the plate-like member 136 are mounted on the upper end portion of the inclined upper wall 128 via pins 140 in such a manner as to be free to rotate in the directions shown by arrows 142 and 144 (Figure 1). In the illustrated embodiment, as shown in Figure 2, a plurality of elongate cuts 146 are formed in the base portion of the plate-like member 136 corresponding to the protrusions 132 on the inclined upper wall 128. A pair of triangular supporting and guiding protrusions 148, spaced from each other in the direction perpendicular to the sheet surface in Figures 1 and 3 and in the vertical direction in Figure 2, are provided in the right surface in Figures 1 and 3 of the plate-like member 136. The auxiliary receiving member 134 of the above structure is free to pivot between a first position shown in Figure 1 and a second position shown in Figures 2 and 3. When the auxiliary receiving member 134 is pivoted to the first position, the supporting surfaces 148a of the pair of supporting and guiding protrusions 148 abut with the upper wall 149 of the housing 12 to hamper accurately the pivoting movement of the auxiliary receiving member 134 in the direction shown by an arrow 142 beyond the first position. When the auxiliary receiving member 134 is pivoted to the second position, the bottom portions of cuts 146 formed in the plate-like member 136 abut with the protrusions 132 of the inclined upper wall 128 to hamper accurately the pivoting movement of the auxiliary receiving member 134 in the direction shown by an arrow 144 beyond the second position. At the first position, the auxiliary receiving member 134 is positioned downstream of the receiving section 126 in the sheet material discharging direction and its one surface (the left surface in Figure 1) extends further from the other end of the upper surface of the inclined upper wall 128 to the right in Figure 1 upwardly inclinedly in a straight line. At the second position, the auxiliary receiving member 134 is positioned above the other end portion of the receiving portion 126, and its other surface, particularly the guide surfaces 148b of the supporting and guiding protrusions 148 are located above the inclined upper wall 128 and extend upwardly inclinedly in a straight line to the right in Figure 3.

An upper cover member 150 (omitted in Figure 2) for covering the receiving section 126 is attached to the opening-closing housing 12. The upper cover member 150 is plate-like, and is bent slightly at its central part in the left-right direction in Figure 3. Protruding portions 152 are provided at both ends of the base portion of the upper cover member 150, and a stop portion 156 is provided in the free end portion of the upper cover member 150. The protruding portions 152 are rotatably mounted to the opening-closing housing 12 via pins 154. A gripping protrusion 158 is further provided at the end of the stop portion 156. With this arrangement, the upper cover member 150 can be easily pivoted in the directions shown by arrows 161 and 162 (Figure 1) by holding the gripping protrusion 158. When the upper cover member 150 is pivoted in the direction of arrow 161 and held at an open position shown in Figure 1, the overhead space of the receiving section 126 is open to view. Thus, the upper surface of the upper cover member 150 abuts with part of the sorter, and consequently, the upper cover member 150 is accurately prevented from pivoting further beyond the open position in the direction of arrow 161. When the upper cover member 150 is pivoted in the direction of arrow 162 and held at a closed position shown in Figure 3, the overhead space of the receiving section 126 is covered and the receiving section 126 is not exposed to view. Thus, the stop portion 156 of the upper cover member 150 abuts with the wall 160 of the opening-closing housing 12. As a result, the upper cover member 150 is accurately prevented from pivoting further beyond the closed position in the direction of arrow 162.

In the image-forming machine described above, at the time of conducting the sheet material discharged from the discharge roller pair 102 to the sorter, the auxiliary receiving member 134 is held at the second position and the upper cover member 150, at the closed position. In this state, the guide surfaces 148b of the supporting and guiding protrusions 148 of the auxiliary receiving member 134 extends upwardly inclinedly toward the upper wall 149 in the housing 12. The upper cover member 150 extends nearly horizontally from the wall 160 to the other end of the main body above the auxiliary receiving member 134. Accordingly, the sheet material discharged from the discharge roller pair 102 is conducted to the introduction opening of the sorter between the auxiliary receiving member 134 and the upper cover member 150 from one end portion of the main body of the machine toward the other end. In other words, the sheet material is fed into the sorter through a passage whose under side is defined by the aforesaid other surface of the auxiliary receiving member 134 (more specifically the guiding surfaces 148b of the supporting guiding protrusions 148) and the upper surface of the upper wall 149 and whose upper side is defined by the under surface of the upper cover member 150. Accordingly, at this time, the auxiliary receiving member 134 acts as a lower guiding means for conducting the sheet material to the sorter, and the upper cover material 150 serves as an upper guiding means for conducting the sheet material to the sorter. To further ensure the above conveying of the sheet material, more supporting and guiding protrusions 148 may be provided on the other surface of the auxiliary receiving member 134.

Furthermore, in the state shown in Figure 3, the auxiliary receiving member 134 is stored in place in the receiving section 126, and the upper cover member 150 covers the overhead space of the receiving portion 126. Accordingly, the main body of the machine becomes compact and the adhesion of dust to the receiving section 126 can be effectively prevented.

On the other hand, in receiving the sheet material discharged from the discharge roller pair 102 in the receiving section 126, the upper cover member 150 is held at the open position, and the auxiliary receiving member 134 at the first position, as shown in Figure 1. When the upper cover member 150 is pivoted in the direction of arrow 161 and held at the open position, the base portion of the upper cover member 150 covers the introduction opening defined in the sorter to hamper introduction of the sheet material through the said opening. When the upper cover member 150 is held at the open position, the overhead space of the receiving section 126 is open to view to put the auxiliary receiving member 134 in condition for positioning at the first position. When thereafter the auxiliary receiving member 134 is pivoted in the direction of arrow 142 and held at the first position, the plate-like member 136 of the auxiliary receiving member 134 extends further upwardly from the upper end of the inclined upper wall 128 in an inclined fashion and its upper surface defines a receiving surface for receiving the sheet material in cooperation with the upper surface of the inclined upper surface 128 (the state shown in Figure 1). Accordingly, the sheet material discharged from the discharge roller pair 102 abuts with the receiving surface of the receiving section 126, moves upwardly along the receiving surface, and is received onto the receiving surface. Then the sheet material discharged into the receiving section 126 in the manner described above moves downwardly along the receiving section 126, and its trailing end abuts with the wall 100. The sheet materials so received are arranged at the trailing ends and thus received in place in the receiving section 126 in the stacked state. At this time, the auxiliary receiving member 134 functions as an auxiliary receiving section downstream of the inclined upper wall 128, and its one surface, in cooperation with the upper surface of the inclined upper wall 128, defines a receiving surface. Thus, sheet materials of relatively large length can be received in place in the receiving section 126.

The illustrated feed means 302 is constructed as a unit, and detachably mounted on the bottom portion of the supporting unit 306. The feed means 302 is provided with a feed housing 308 in which a cassette-receiving section 310 is defined. A feed roller 314 adapted to rotate in the direction shown by an arrow 312 is disposed above the cassette-receiving section 310. A loading opening 316 is defined in the right surface in Figure 1 of the feed housing 308. A box-like cassette 318 is detachably loaded into the cassette-receiving section 310 through the loading opening 316. A plate 320 adapted to be biased upwardly by the action of a biasing means (not shown) such as a spring with its rear end as a fulcrum is provided in the cassette 318, and sheet materials are placed on the plate 320 in the stacked state. In the left surface in Figure 1 of the supporting unit 306, a delivery opening 322 is defined, and guide plates 324 and 326 defining a delivery passage are disposed between the delivery opening 322 and the cassette-receiving section 310.

The sorter 304 is also constructed as a unit, and mounted detachably on the upper portion of the supporting unit 306. The sorter 304 is provided with a bottom wall 328 and a pair of side walls 330 (Figure 2) extending upwardly from the bottom wall 328. A plurality of vertically spaced bin trays 334 are disposed between the pair of side walls 330. One end portion (the left end portion in Figures 1 and 2) of each of the bin trays 334 is vertically movably supported by supporting post 336, and its other end portion (the right end portion in Figures 1 and 2) is supported by a supporting projection 340 of a supporting member 338. An elevating mechanism (not shown) is disposed further at one end portion of the bin trays 334. The elevating mechanism moves one end portion of the bin trays 334 successively upwardly or downwardly. An introduction opening 342 is defined in the left surface in Figures 1 and 2 of the supporting unit 306, and a sheet material introduced through the introduction opening 342 in the manner to be described is received in any of the plurality of bin trays 334 via an introduction passage defined by a guide plate pair 344, an introduction roller pair 346 and a guide plate pair 348.

The supporting unit 306 is provided with a pair of spaced base plates 350 (only one of which is shown in Figure 1), and the feed means 302 is mounted between the bottom portions of the pair of base plates 350. The sorter 304 is mounted between the upper parts of the base plates 350. As shown in Figures 1 and 2, the supporting unit 306 is disposed on the right-hand side of the main body 301 of the machine, and connected releasably to the lower housing 8 of the main body 301. A pair of engaging pieces 352 (see Figure 2) are provided at the left end in Figures 1 and 2 of the supporting unit 306. An engaging opening 354 corresponding to the pair of engaging pieces 352 is formed at a predetermined site of the wall 80 of the lower housing 8. Accordingly, the supporting unit 306 is detachably secured to the housing 8 by inserting the engaging pieces 352 through the engaging opening 354 and bringing their claw portions 352a (Figure 1) into engagement with that site of the wall 80 which defines the engaging opening 354. In this secured state, the delivery opening 322 defined in the supporting unit 306 is connected to the introduction opening 76 defined in the machine housing 6, and a feed passage to the sorter 304 which is defined above the housing 6 as stated below is connected to the introduction opening 342 defined in the supporting unit 306. In the illustrated embodiment, the supporting unit 306 is secured to one side of the main body 301 of the machine, and thus the feed means 302 and the sorter 304 are disposed on one side of the main body 301. Accordingly, as can be easily understood from Figure 1, the entire machine becomes relatively compact and the installation space can be relatively small. Furthermore, as in the embodiment described, it is easy to employ a shell-type supporting structure in which part of the housing 6 is opened upwardly.

In the described embodiment, when a sheet material discharged from the discharge roller pair 102 is to be received in the receiving section 126, the upper cover member 150 is held at the open position and the auxiliary receiving member 134 is held at the first position, as shown in Figure 1. When the upper cover member 150 is pivoted in the direction of arrow 161 and held at the open position, the base portion of the upper cover member 150 covers the introduction opening 342 defined by the supporting unit 306 to hamper introduction of the sheet material through the introduction opening 342. When the upper cover member 150 is held at the open position, the overhead space of the receiving section 126 is opened to permit the auxiliary receiving member 134 to be held at the first position. When thereafter, the auxiliary receiving member 134 is pivoted in the direction of arrow 142 and held at the first position, the state shown in Figure 1 is created. Specifically, the plate-like member 136 of the auxiliary receiving member 134 extends further upwardly inclinedly from the upper end of the inclined upper wall 128 and its upper surface, in cooperation with the upper surface of the inclined upper wall 128, defines a receiving surface for receiving the sheet material. Hence, the sheet material discharged from the discharge roller pair 102 contacts the receiving surface of the receiving section 126 and moves upwardly along the receiving surface. The sheet material discharged into the receiving section then moves downwardly along the receiving surface of the receiving section 126 by its own weight until its trailing end abuts with the wall 100. The sheet materials so received are arranged at their trailing ends as a result of abutting with the wall 100 and stacked in the receiving section 126.

On the other hand, when the sheet material discharged from the discharge roller pair 102 is to be conducted to the sorter 304, the auxiliary receiving member 134 is held at the second position, and the upper cover member 150 is held at the closed position. In this state, the guiding surface 148b of the supporting guide projection 148 of the auxiliary receiving member 134 extends inclinedly upwardly toward the upper wall 149 of the opening closing housing 12. The upper cover member 150 extends nearly horizontally from the wall 160 to the upper wall 149 above the auxiliary receiving member 134. Accordingly, as shown in Figure 3, a feed passage for conducting the sheet material to the sorter 304 is defined above the machine housing 6 (the lower side of the feed passage is defined by the guiding surface 148b of the supporting guide projection 148 and the upper surface of the wall 149 of the opening-closing housing 12 and its upper side, by the lower surface of the upper cover member 150), and the sheet material discharged from the discharge roller pair 102 passes through the feed passage from the left end portion of the housing 6 toward its right end and is conducted to the introduction opening 342 of the sorter 304. The auxiliary receiving member 134 therefore acts as a lower guide means for conducting the sheet material to the sorter 304, and the upper cover member 150 acts as an upper guide means for conducting the sheet material to the sorter 304. To perform the above conveyance of the sheet material more accurately, more supporting guide projections 148 may be provided on the other surface of the auxiliary receiving member 134. In the state shown in Figure 3, the auxiliary receiving member 134 is stored in the receiving section 126 and the upper cover member 150 covers the overhead space of the receiving portion 126. Accordingly, the main body 301 of the machine becomes compact and dust gathering at the receiving section 126 can be effectively prevented.

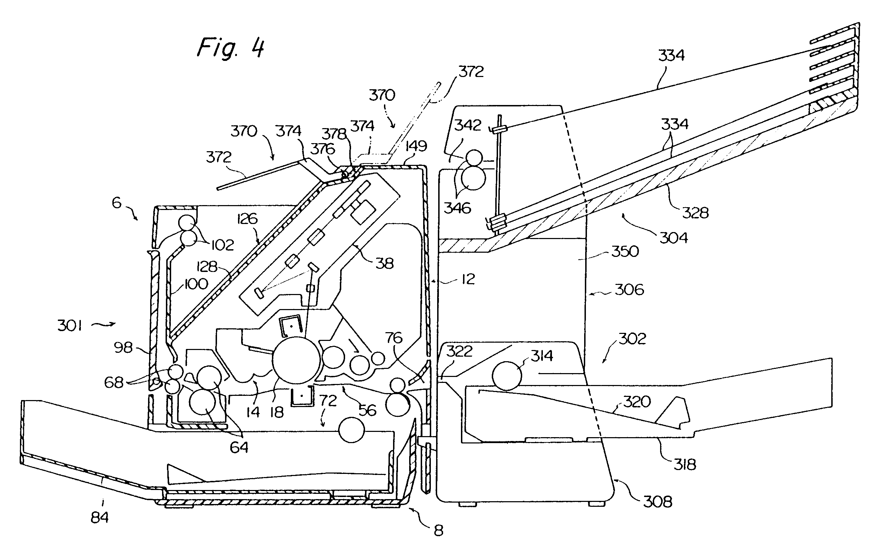

Figure 4 shows a modified example of the laser beam printer in the above described embodiment. In this modified example, an improvement is made in the auxiliary receiving member.

In Figure 4, the auxiliary receiving member 370 in the modified example is provided with a plate-like main body portion 372 and supporting projections (only one of which is shown in Figure 4). Each of the supporting projections 374 is pivotably mounted on the upper end portion of the receiving section 126 via a pin 376 (or more specifically, on that site which defines a depressed portion 378 provided in the upper end portion of the receiving section 126). The auxiliary receiving member 370 of this structure may be used in place of the auxiliary receiving member 134 and the upper cover member 150 in the embodiment shown in Figures 1 to 3. Otherwise, the structure of the modified example is substantially the same as that of the embodiment shown in Figures 1 to 3.

When the sheet material is to be received in the receiving section 126, the auxiliary receiving member 370 is held at a first position shown by the two-dot chain line in Figure 4. When it is held at the first position, the supporting projection 374 abuts with the upper wall 149 of the opening-closing housing 12 to hamper pivoting movement of the auxiliary receiving member 370 beyond the first position. At the first position, the main body portion 372 of the auxiliary receiving member 370 extends further upwardly inclinedly from the upper end of the inclined upper wall 128, and its inner surface (the left surface in the state shown by the two-dot chain line in Figure 4) cooperates with the upper surface of the inclined upper wall 128 and defines a receiving surface for receiving the sheet material. The main body portion 372 shuts off the feed passage for feeding the sheet material to the sorter 304. Accordingly, the sheet material discharged from the discharge roller pair 102 is received in the receiving section 126 in the same manner as described above. On the other hand, when the sheet material is to be conducted to the sorter 304, the auxiliary receiving member 370 is held at a second position shown by the solid line in Figure 4. When it is held at the second position, the supporting projection 374 abuts with the upper end portion of the inclined upper wall 128 to hamper the pivoting movement of the auxiliary receiving member 370 beyond the second position. At the second position, the main body portion 372 is positioned above the inclined upper wall 128 and extends nearly horizontally. Its inner surface (the under surface in the state shown by the solid line in Figure 4) defines an upper side of the feed passage for conducting the sheet material to the sorter 304 and the lower side of the feed passage is defined by the upper surface of the inclined upper wall 128 and the upper surface of the upper wall 139. Accordingly, the sheet material discharged by the action of the discharge roller pair 102 is guided at its upper surface by the inner surface of the main body portion 372 of the auxiliary receiving member 370 and conducted to the introduction opening 342 defined in the supporting unit 306 through the feed passage.

## Claims

1. An image-forming machine comprising a main body (301) for forming an image on the surface of a sheet material during conveyance through a conveying passage (69), a feed means (302) for feeding a sheet material to the conveying passage (69), and a sorter (304) having a plurality of bin trays for sorting sheet materials among the bin trays, said sheet materials being discharged from the conveying passage (69) and selectively introduced into the sorter (304),
wherein
the feed means (302) and the sorter (304) are mounted on a supporting unit (306) disposed on one side of the main body (301), and the supporting unit (306) is detachably mounted on the main body (301).

2. The image-forming machine of claim 1 in which the feed means (302) is disposed in the lower part of the supporting unit (306); the sorter (304) is disposed above the feed means (302); and a sheet material directed toward the sorter (304) passes above a receiving section (126) for receiving a sheet conveyed through the conveying passage (69), and through an introduction opening (342) defined in the supporting unit (306), is introduced into the sorter (304).

3. The image-forming machine of claim 2 in which an auxiliary receiving member (134) is mounted on the receiving section (126) so that it is free to pivot between a first position at which it is positioned downstream of the receiving section (126) and receives a sheet material discharged from the conveying passage (69) and a second position at which it is positioned above the receiving section (126) and guides the under surface of the sheet material discharged from the conveying passage (69) and conducts it to the sorter (304).

4. The image-forming machine of claim 3 in which an upper cover member (150) is mounted on the main body (301) so as to be free to pivot between an open position at which it keeps the overhead space of the receiving section (126) open and a closed position at which it covers the overhead space of the receiving section (126); and when the sheet material discharged from the conveying passage (69) is to be received by the receiving section (126), the upper cover member (150) is held at the open position and the auxiliary receiving member (134) is held at the first position, and when the sheet material discharged from the conveying passage (69) is to be conducted to the sorter (304), the upper cover member (150) is held at the closed position and the auxiliary receiving member (134) is held at the second position.

5. The image-forming machine of claim 2 in which an auxiliary receiving member (134) is mounted on the receiving section (126) so as to be free to pivot between a first position at which it is positioned downstream of the receiving section (126) and receives the sheet material discharged from the conveying passage (69) and a second position at which it is positioned above the receiving section (126) and guides the upper surface of the sheet material discharged from the conveying passage (69) and conducts it to the sorter (304).
